# EUROPEAN PATENT APPLICATION

(11) **EP 2 888 950 A1**
(43) Date of publication of application: **01.07.2015**
(21) Application number: 13382552.1
(22) Date of filing: 24.12.2013
(51) Int. Cl.: A23L 1/308, A23L 1/09, A23L 1/29

(54) **Methods for treating, preventing, or reducing neuroinflammation or cognitive impairment**

(71) Applicant: ABBOTT LABORATORIES, Abbott Park, IL 60064-3500 (US)
(72) Inventor: Vazquez Hernandez, Enrique, 18151 Ogijares (Granada) (ES); Barranco Perez, Alejandro, 18110 Las Gabias (Granada) (ES); Ramirez Gonzales, Maria, 18003 Granada (ES); Rueda Cabrera, Ricardo, 18008 Granada (ES)
(74) Representative: Ungria López, Javier

(57) **Abstract**

Certain aspects of the methods disclosed herein relate to treating neuroinflammation, preventing neuroinflammation, or reducing neuroinflammation, and combinations of the foregoing in a subject by administration of 2-fucosyl-lactose. Other aspects of the methods disclosed herein relate to treating cognitive impairment, preventing cognitive impairment, or reducing cognitive impairment, and combinations of the foregoing in a subject by administration of 2-fucosyl-lactose.

## Description

### FIELD OF THE DISCLOSURE

Provided herein are methods for treating neuroinflammation, preventing neuroinflammation, or reducing neuroinflammation, and combinations of the foregoing in a subject by administration of 2-fucosyl-lactose (2FL). Also provided herein are methods for treating cognitive impairment, preventing cognitive impairment, or reducing cognitive impairment, and combinations of the foregoing in a subject by administration of 2-fucosyl-lactose.

### BACKGROUND

2-fucosyl-lactose, a human milk oligosaccharide (HMO), is an ingredient present in human milk and may play a role in the development of an infant receiving human milk. Some HMOs have been postulated as molecules responsible for some of the benefits provided by human milk, such as modulation of the immune system, regulation of intestinal maturation, and modulation of intestinal microflora.

Neuroinflammation, cognitive impairment, or both can have a negative impact on the overall health and well-being of a subject. Neuroinflammation, cognitive impairment, or both can impact subjects of all ages and can result from numerous causes.

Thus, for subjects with neuroinflammation, cognitive impairment, or both, there is a need to treat, prevent, or reduce neuroinflammation, cognitive impairment, or both. Certain aspects of the present disclosure address this need. For example, in the present disclosure, nutritional compositions comprising 2-fucosyl-lactose can be used to treat, prevent, or reduce cognitive impairment, neuroinflammation, or both.

### SUMMARY

Disclosed herein are methods for treating neuroinflammation, for preventing neuroinflammation, or for reducing neuroinflammation, and combinations of the foregoing. The methods comprise administering to a subject a nutritional composition comprising a therapeutically effective amount of 2FL (2-fucosyl-lactose).

Also disclosed herein are methods for treating cognitive impairment, for preventing cognitive impairment, or for reducing cognitive impairment, and combinations of the foregoing. The methods comprise administering to a subject (e.g., a human) having neuroinflammation a nutritional composition comprising a therapeutically effective amount of 2FL.

### BRIEF DESCRIPTION OF THE DRAWINGS

The following drawings form part of the present specification and are included to further demonstrate certain aspects of the methods disclosed herein. The present disclosure may be better understood by reference to one or more of these drawings in combination with the description of specific embodiments presented herein. However, the drawings should not be viewed as limiting of the methods disclosed herein.
**Figure 1A****:** Illustrates results from IntelliCage™ testing of mice receiving saline, 2FL + saline, LPS, or 2FL + LPS.
**Figure 1B****:** Illustrates results from IntelliCage™ testing of mice receiving saline, 2FL + saline, LPS, or 2FL + LPS.
**Figure 2A****:** Illustrates results from Skinner box testing of rats receiving saline, LPS, 2FL + saline, or 2FL + LPS.
**Figure 2B**: Illustrates results from Skinner box testing of rats receiving saline, LPS, 2FL + saline, or 2FL + LPS.
**Figure 2C****:** Illustrates results of the Skinner box testing of rats receiving saline as compared to LPS.
**Figure 2D****:** Illustrates results of the Skinner box testing of rats receiving LPS versus 2FL + LPS.
**Figure 3A****:** Microphotographies taken of rat brain rostro-caudal sections showing GFAP immunoreactivity.
**Figure 3B****:** Microphotographies taken of rat brain rostro-caudal sections showing GFAP immunoreactivity.
**Figure 3C****:** Western blot results and densitometry measurements relating to GFAP levels in rat brains.

### DETAILED DESCRIPTION

Disclosed herein are methods for treating neuroinflammation, for preventing neuroinflammation, or for reducing neuroinflammation, and combinations of the foregoing. The methods comprise administering to a subject a nutritional composition comprising a therapeutically effective amount of 2FL (2-fucosyl-lactose). For example, certain of the methods are for treating neuroinflammation where the subject is in need of treatment for neuroinflammation, other methods are for preventing neuroinflammation, and other methods are for reducing neuroinflammation where the subject is in need of treatment for neuroinflammation. In certain instances, the neuroinflammation results in cognitive impairment or could result in cognitive impairment, while with other examples, the methods can prevent cognition impairment or reduces cognition impairment.

Also disclosed herein are methods for treating cognitive impairment, for preventing cognitive impairment, or for reducing cognitive impairment, and combinations of the foregoing. The methods comprise administering to a subject (e.g., a human) having neuroinflammation a nutritional composition comprising a therapeutically effective amount of 2FL. For example, certain of the methods are for treating cognitive impairment and the subject is in need of treatment for cognitive impairment, other methods are for preventing cognitive impairment, and other methods are for reducing cognitive impairment and the subject is in need of treatment for cognitive impairment.

In certain aspects of the methods disclosed herein, the subject has chronic neuroinflammation.

In certain aspects of the methods disclosed herein, the subject is administered a therapeutically effective amount of 2FL from about 25 mg/kg bodyweight to about 1000 mg/kg bodyweight. In other aspects of the methods disclosed herein the nutritional composition is a liquid comprising from about 0.001 mg/mL to about 20 mg/mL of 2FL. In yet other aspects, the nutritional composition is a powder comprising from about 0.0005% to about 5% of 2FL by weight of the powder.

In certain instances, the nutritional composition can further comprise one or more of a fat, a protein, or a carbohydrate.

The subject, in the methods disclosed herein, can be a human who has an age of not more than about 20 years old, from about 20 years old to about 40 years old, or of not less than about 40 years old.

The term "administering," unless otherwise indicated herein, should be understood to include at least one act of providing the nutritional composition to a subject, at least one act of consuming the nutritional composition, and combinations thereof.

In certain embodiments, the methods disclosed herein comprise orally administering the nutritional composition to a subject. The term "oral administration," unless otherwise indicated herein, should be understood to include any form of administration in which the nutritional composition passes through the esophagus of the subject. For example, oral administration can refer to oral consumption, but may also include nasogastric intubation, in which a tube is run from the nose to the stomach of the subject to administer the composition. In accordance with certain embodiments described herein, suitable forms of the composition for oral administration to the subject include caplets, tablets, pills, capsules, chewable tablets, quick dissolve tablets, effervescent tablets, solutions, suspensions, emulsions, multi-layer tablets, bi-layer tablets, soft gelatin capsules, hard gelatin capsules, lozenges, chewable lozenges, beads, granules, particles, microparticles, dispersible granules, sachets, and combinations thereof. Oral administration can include any suitable method for any of the indications disclosed herein.

The term "nutritional composition" as used herein, unless otherwise specified, refers to nutritional products in various forms including, but not limited to, liquids, solids, powders, semi-solids, semi-liquids, nutritional supplements, and any other nutritional food product known in the art. A nutritional composition in powder form may be reconstituted upon addition of water or another liquid to form a liquid nutritional composition prior to administration to (e.g., providing to or consumption by) a subject. As discussed below, in certain instances disclosed herein, the nutritional compositions can comprise at least one of a source of protein, a source of carbohydrate, and a source of fat. The nutritional compositions disclosed herein are generally suitable for oral consumption by a human. In some instances, the nutritional composition can be a nutraceutical.

The term "subject," unless otherwise indicated herein, refers to a mammal, including, but not limited to, a human, a domesticated farm animal (e.g., cow, horse, or pig), or a pet (e.g., dog or cat). In certain aspects disclosed herein, the subject is a human. In certain instances the human is about 1 year old, about 5 years old, about 10 years old, about 15 years old, about 20 years old, about 25 years old, about 30 years old, about 40 years old, about 50 years old, about 60 years old, about 70 years old, about 80 years old, about 100 years old, about 120 years old, about 130 years old, from about zero years old to about 120 years old, from about zero years old to about 20 years old, from about 20 to about 40 years old, from about 40 years old to about 120 years old, not more than about 1 year old, not more than about 5 years old, not more than about 10 years old, not more than about 20 years old, not more than about 40 years old, not less than about 20 years old, not less than about 40 years old, not less than about 60 years old, not less than about 80 years old, not less than about 100 years old, or not less than about 120 years old.

The term "neuroinflammation," unless otherwise indicated herein, refers to inflammation of the nervous tissue (e.g., brain, spinal cord, or peripheral nerves). Neuroinflammation can be caused by any means, including but not limited to diseases, disorders, infection, exposure to LPS, traumatic brain injury, toxic metabolites, cancer therapy (e.g., chemotherapy), or autoimmunity. Certain aspects of neuroinflammation can result in sickness behaviors; sickness behaviors can include, for example, a reduction in activity, a reduction in exploration, decreased social interaction, fever, a reduction in consumption of food, a reduction in consumption of drink, hypersomnia, activation of the hypothalamic-pituitary-adrenal axis, suppression of long term potentiation (LTP) in the hippocampus, and combinations thereof. In certain instances, activation of glial cells (e.g., astrocytes, microglia, or macroglia) can be part of the cause of or result from neuroinflammation. In other instances, a compromised blood-brain-barrier (BBB) contributes to or is the result of neuroinflammation; for example, a compromised BBB can permit one or more of T Cells, B Cells, plasma, macrophages, circulating blood components, or peripheral immune cells to cross the BBB. In certain instances, neuroinflammation can be induced by peripheral stimuli (e.g., by systemic inflammation). Neuroinflammation can be acute, chronic, or both.

Acute neuroinflammation can, in certain instances, be caused by any means, such as a disease, a disorder, a result of injury, cancer therapy (e.g., chemotherapy), or induced peripheral stimuli. Acute neuroinflammation can, for example, result in platelet deposition, tissue edema, endothelial cell activation, or an increase in certain inflammatory-related molecules (e.g., chemokines or cytokines).

Chronic neuroinflammation can, in certain instances, be caused by any means, such as a disease, a disorder, a result of one or more of neurodegenerative diseases, aging, autoimmunity, viruses, microbes (e.g., bacteria or yeast), traumatic injury, traumatic brain injury, cancer therapy (e.g., chemotherapy), toxic metabolites, or induced peripheral stimuli. Chronic neuroinflammation can include one or more of sustained activation of glial cells, recruitment of other immune cells into the brain.

In certain aspects of neuroinflammation, there is activation (in some instances it is a rapid activation) of microglia (e.g., astrocytes), but little or no peripheral immune response. In other aspects, microglia produce oxidative species and there is a peripheral immune response (e.g., recruiting peripheral immune cells). In other instances, microglia (e.g., astrocytes) can become activated, can release a variety of growth factors, can undergo morphological changes, or combinations thereof. Astrocytes can in certain instances be activated to and such activation can, for example: provide biochemical support of endothelial cells that form the blood-brain barrier, provide nutrients to the nervous tissue, maintain extracellular ion balance, assist in the repair and scarring process of the brain and spinal cord (e.g., following traumatic injuries or acute inflammation), support neurons, and assist in synaptic plasticity mechanisms. Activation of astrocytes can, in certain instances, result in an increase in expression of Glial Fibrillary Acidic Protein (GFAP). Deficiencies in GFAP can provoke an abnormal myelination, a worsening of white matter, and functional alterations in neuron-astrocyte communication - all of which can be a result of neuroinflammation or a cause of neuroinflammation.

In certain aspects of neuroinflammation, cytokines (e.g., chemokines) can be released by brain cells (e.g., glial cells, microglia, astrocytes, or endothelial cells), up-regulated or down-regulated by brain cells, or can have an increased or decreased level in the brain. Such cytokines can include, but are not limited to pro-inflammatory cytokines (e.g., IL-6, IL-1α, IL-1β, TNF-α (Tumor Necrosis factor-alpha), or CCL2 (Chemokine ligand 2)) or anti-inflammatory cytokines. In certain instances, the release of one or more cytokines can result in a compromised BBB. In certain aspects, the level of pro-inflammatory cytokines is increased or up-regulated. In other aspects, the level of anti-inflammatory cytokines is decreased or down-regulated.

The term "reducing neuroinflammation," unless otherwise indicated herein, refers to diminishing one or more causes of, manifestations of, or results of neuroinflammation (acute or chronic), such as but not limited to activation of glial cells, compromised BBB, increased levels of pro-inflammatory cytokines (e.g., chemokines), increased sickness behavior, decreased levels of GFAB expression, or decreased levels of anti-inflammatory cytokines.

The term "preventing neuroinflammation," unless otherwise indicated herein, refers to stopping or diminishing the potential onset of one or more causes of manifestations, or results of neuroinflammation (acute or chronic), such as but not limited to activation of glial cells, compromised BBB, increased levels of pro-inflammatory cytokines (e.g., chemokines), increased sickness behavior, decreased levels of GFAB expression, or decreased levels of anti-inflammatory cytokines.

The term "treating neuroinflammation," unless otherwise indicated herein, refers to reducing neuroinflammation, ameliorating at least one symptom resulting from neuroinflammation (such as a symptom of a disease or disorder that could cause neuroinflammation), or both.

The term "cognitive impairment," unless otherwise indicated herein, refers to any impairment of cognition such as a condition characterized by one or more of the following behaviors: reduction in activity (e.g., exploration), decreased social interaction, fever, reduction in consumption of food, reduction in consumption of drink, hypersomnia, activation of the hypthalmic-pituitary-adrenal axis, increased sympathetic activation, inhibition of at least one form of learning (e.g., associative learning), inhibition of at least one form of memory function (e.g., executive function), inhibition of learning, inhibition of memory acquisition, inhibition of memory recall, suppression of long term potentiation (LTP) in the hippocampus, or a combination thereof. Cognitive impairment can, in certain instances, result from neuroinflammation. In humans, any suitable method for testing and neuroimaging of the hippocampus or brain function can be used to determine or assess cognition and its potential impairment. For example, cognition (e.g., memory or learning) and its potential impairment can be measured using any suitable psychological test, including without limitation, 'Kiel Locomotor Maze', containing features of the Radial Arm Maze and the Morris Water Maze, in order to assess spatial memory and orientation, which has been optimized for school age children, or Cambridge Neuropsychological Test Automated Battery (CANTAB), a computerized battery of nonverbal visually-presented neuropsychological tests, designed to test spatial memory span, spatial working memory and spatial recognition. Additionally, the outcome of methods related to cognitive impairment disclosed herein can be shown via comparative testing in animals (e.g., rats or mice), using the same composition administered to humans.

The term "reducing cognitive impairment," unless otherwise indicated herein, refers to diminishing one or more causes of, manifestations of, or results of cognitive impairment, such as but not limited to reduction in activity, inhibition of at least one form of learning (e.g., associative learning), or inhibition of at least one form of memory function (e.g., executive function).

The term "preventing cognitive impairment," unless otherwise indicated herein, refers to stopping or diminishing the potential onset of one or more causes of, manifestations of, or results of cognitive impairment, such as but not limited to reduction in activity, inhibition of at least one form of learning (e.g., associative learning), or inhibition of at least one form of memory function (e.g., executive function).

The term "treating cognitive impairment," unless otherwise indicated herein, refers to reducing cognitive impairment, ameliorating at least one symptom relating to or resulting from cognitive impairment (such as a symptom of a disease or disorder that could cause cognitive impairment), or both.

The term "therapeutically effective amount," unless otherwise indicated herein, refers to an amount effective to achieve an indicated desired result. A therapeutically effective amount can be administered in one or more administrations. More than one therapeutically effective amount can be administered over the course of a time period (e.g.., over the course of a day, a week, a month, a quarter, a year, or a decade), for example, the number of administrations can be more than about 1, about 1, about 2, about 3, about 4, about 5, about 6, about 7, about 8, about 9, about 10, about 12, about 13, about 14, about 15, about 16, about 17, about 18, about 19, about 20, about 21, about 22, about 23, about 24, about 25, about 28, about 30, about 31, about 40, about 50, or about 52 therapeutically effective amounts can, in certain instances, be administered to a subject over a given time period. In certain aspects of the methods disclosed herein, if more than one therapeutically effective amount is administered, the amount of 2FL can be the same or different for one or more of the administrations. In certain aspects of the methods disclosed herein, the nutritional composition comprising a therapeutically effective amount of 2FL is administered from one to about ten times per day (on average), optionally over a time period of several weeks (e.g., at least 3 weeks, at least 4 weeks, at least 8 weeks, or more) or several months (e.g., at least 3 months, at least 4 months, at least 5 months, at least 6 months or more).

As discussed above, according to the methods disclosed herein, 2-fucosyl-lactose ("2FL") is administered to the subject. 2FL has a molecular formula of C₁₈H₃₂O₁₅ and a molecular mass of 488.43768; its CAS registry number is 41263-94-9 and its PubChem CID is 170484. Suitable 2FL for use in the methods disclosed herein may be produced or isolated by any suitable method such as but not limited to separation, extraction, fermentation, chemical synthesis, or combinations thereof. Synthetic (i.e., non-human or animal sourced) 2FL is preferably used in the methods disclosed herein.

Nutritional compositions for use in the disclosed methods may comprise 2FL in any suitable concentration that is therapeutically effective. It should be understood that the specific amounts of 2FL discussed herein (i.e., the concentrations in terms of mg/L, the % by weight of the powder form, and the amounts administered in terms of mg/kg body weight) are intended to provide examples of therapeutically effective amounts of 2FL that may be administered according to the methods disclosed herein.

In certain aspects of the disclosed methods the amount of 2FL administered (e.g., a therapeutically effective amount) can be from about 1 mg/kg body weight (BW) to about 2500 mg/kg BW, from about 25 mg/kg BW to about 1000 mg/kg BW, from about 100 mg/kg BW to about 500 mg/kg BW, about 1 mg/kg BW, about 5 mg/kg BW, about 10 mg/kg BW, about 25 mg/kg BW, about 50 mg/kg BW, about 100 mg/kg BW, about 150 mg/kg BW, about 200 mg/kg BW, about 250 mg/kg BW, about 300 mg/kg BW, about 400 mg/kg BW, about 500 mg/kg BW, about 600 mg/kg BW, about 700 mg/kg BW, about 800 mg/kg BW, about 900 mg/kg BW, about 1000 mg/kg BW, about 1250 mg/kg BW, about 1500 mg/kg BW, about 2000 mg/kg BW, or about 2500 mg/kg BW.

In certain aspects of the disclosed methods, the nutritional composition is a liquid comprising 2FL at a concentration from about 0.0001 mg/mL to about 50 mg/mL, from about 0.001 mg/mL to about 20 mg/mL, from about 0.01 mg/mL to about 10 mg/mL, from about 0.05 mg/ mL to about 5 mg/mL, about 0.0001 mg/mL, about 0.0005 mg/mL, about 0.001 mg/mL, about 0.005 mg/mL, about 0.01 mg/mL, about 0.025 mg/mL, about 0.05 mg/mL, about 0.075 mg/mL, about 0.1 mg/mL, about 0.2 mg/mL, about 0.3 mg/mL, about 0.4 mg/mL, about 0.5 mg/mL, about 0.6 mg/mL, about 0.7 mg/mL, about 0.8 mg/mL, about 0.9 mg/mL, about 1.0 mg/mL, about 1.2 mg/mL, about 1.4 mg/mL, about 1.6 mg/mL, about 1.8 mg/mL, about 2.0 mg/mL, about 5.0 mg/mL, about 7.5 mg/mL, about 10 mg/mL, about 15 mg/mL, about 20 mg/mL, about 25 mg/mL, about 30 mg/mL, about 40 mg/mL, or about 50 mg/mL.

In certain aspects of the disclosed methods, the nutritional composition can be a powdered form which can be made into a liquid form prior to administration/consumption. The nutritional composition when in the powdered form can comprise 2FL at a concentration comprising from about 0.0001% to about 10%, from about 0.0005% to about 5%, from about 0.001% to about 2%, from about 0.01 % to about 1%, from about 0.05% to about 1%, from about 0.1% to about 0.5%, about 0.0001%, about 0.0005%, about 0.001%, about 0.005%, about 0.01%, about 0.025%, about 0.05%, about 0.075%, about 0.1%, about 0.2%, about 0.3%, about 0.4%, about 0.5%, about 0.6%, about 0.7%, about 0.8 %, about 0.9%, about 1.0%, about 1.5%, about 2%, about 2.5%, about 3%, about 4%, about 5%, about 7.5%, or about 10%. All percentages in this paragraph are relative to the total weight of the powder.

In certain aspects of the methods disclosed herein, the 2FL is administered in nutritional compositions in combination with one or more other components (e.g., other active ingredients, prebiotic oligosaccharides, or probiotics). In certain aspects of the methods disclosed herein, 2FL is included in a nutritional composition with multiple additional components.

In addition to administering the disclosed nutritional compositions, in certain instances, the methods disclosed herein can include the administration of other compositions to a subject. These compositions can be part of the nutritional composition, provided as separate compositions, or both. In those instances where the nutritional composition and the other compositions are separate compositions, they may be administered together (e.g., in a single administration step, in separate administration steps, or both). Where the other compositions and the nutritional compositions are administered separately, the nutritional compositions and the other compositions may be administered in any order. For example, the nutritional compositions or the other composition may be administered first.

In certain aspects, the methods disclosed herein may involve administering the nutritional composition in any suitable manner or form that allows for treating, preventing, or reducing neuroinflammation in a subject, where the manner (e.g., 2FL amount, administration frequency, and administration route) of administration can depend on one or more factors including but not limited to the subject's medical history, any disease (including disease state or disease stage) or disorder of the subject, therapies (e.g., medications) currently being administered to the subject, or the subject's risk factors for disease (e.g., environmental, genetic, health status, weight, or diet).

In certain aspects, the methods disclosed herein may involve administering the nutritional composition in any suitable manner or form that allows for treating, preventing, or reducing cognitive impairment in a subject, where the manner of administration can depend on one or more factors including but not limited to the subject's medical history, any disease (including disease state or disease stage) or disorder of the subject, therapies (e.g., medications) currently being administered to the subject, or the subject's risk factors for disease (e.g., environmental, genetic, health status, weight, or diet).

Certain of the methods disclosed herein relate to neuroinflammation. For example, certain methods include methods for treating neuroinflammation, methods for preventing neuroinflammation, or methods for reducing neuroinflammation; and combinations of the foregoing. The methods can comprise at least one step of administering to a subject a nutritional composition. The nutritional composition comprises at least 2FL in a therapeutically effective amount (e.g., from about 1 mg/kg BW to about 2500 mg/kg BW, from about 0.0001 mg/mL to about 50 mg/mL, or from about 0.0001% to about 10% if in a powdered form). In certain instances, the method is for treating neuroinflammation and the subject is in need of treatment for neuroinflammation. In certain aspects, the method is for preventing neuroinflammation. In other aspects, the method is for reducing neuroinflammation and the subject is in need of treatment for neuroinflammation. In certain instances, the neuroinflammation does result in cognitive impairment or could result in cognitive impairment (if left untreated). In other aspects, the method can prevent cognition impairment or reduce cognition impairment. In certain instances, the subject may have a disease or disorder such as an autoimmune disease or a disruptive behavioral disorder, or may have experienced trauma. In certain instances, the subject can have one or more of the following diseases or disorders disruptive behavior disorders, a pervasive developmental disorder, a disease causing dementia, or an autoimmune disease of the digestive tract. In other instances, the subject can have one or more of the following diseases or disorders ADD, Autism, Alzheimer's disease, Parkinson's disease, Huntington's disease, Celiac disease, or an inflammatory bowel disease. In still other instances, the subject can have one or more of an infection, a fever, trauma-induced neuroinflammation, brain inflammation, or reduced cognition. In certain examples, the subject may be not more than 20 years old or not less than 40 years old.

Other aspects of the methods disclosed herein relate to cognitive impairment. For example, certain methods include methods for treating cognitive impairment, methods for preventing cognitive impairment, or methods for reducing cognitive impairment, and combinations of the foregoing. The methods can include at least one step of administering to a subject a nutritional composition. The nutritional composition comprises at least 2FL in a therapeutically effective amount (e.g., from about 1 mg/kg BW to about 2500 mg/kg BW, from about 0.0001 mg/mL to about 50 mg/mL, from about 0.0001% to about 10% if in a powdered form). In certain instances, the method is for treating cognitive impairment and the subject is in need of treatment for cognitive impairment. In other instances, the method is for preventing cognitive impairment. In still other aspects, the method is for reducing cognitive impairment and the subject is in need of treatment for cognitive impairment. In certain instances, the subject may have a disease or disorder such as an autoimmune disease or a disruptive behavioral disorder, or may have experienced trauma. In certain instances, the subject can have one or more of the following diseases or disorders disruptive behavior disorders, a pervasive developmental disorder, a disease causing dementia, or an autoimmune disease of the digestive tract. In other instances, the subject can have one or more of the following diseases or disorders ADD, Autism, Alzheimer's disease, Parkinson's disease, Huntington's disease, Celiac disease, or an inflammatory bowel disease. In still other instances, the subject can have one or more of an infection, a fever, trauma-induced neuroinflammation, brain inflammation, or reduced cognition. In certain examples, the subject may be not more than 20 years old or not less than 40 years old.

For any of the methods disclosed herein the subject can, in certain instances, have one or more diseases or disorders. In certain instances, the disease or disorder can be one or more of a bacterial infection (e.g. bacterial meningitis), a viral disease (e.g., viral meningitis), a fever, a disruptive behavior disorder (e.g., Attention Deficit Disorder (ADD), Attention deficit hyperactivity disorder (ADHD), or Adult ADD), a pervasive developmental disorder (e.g., Autism, Asperger syndrome, or Rett syndrome), a disease causing dementia (e.g., Alzheimer disease, Huntington's disease, or Parkinson disease), a cancer (e.g., a blood cancer such as multiple myeloma, a brain tumor, an eye tumor, a mouth tumor, a primary cancer, or a metastatic cancer), a disease that results in systemic inflammation, a disease that results in neuroinflammation, or an autoimmune disease. Autoimmune diseases can be an autoimmune disease of the digestive tract such as inflammatory bowel disease (e.g., Crohn's disease or ulcerative cholitis) or Celiac disease, multiple sclerosis, lupus, or diabetes type I. In certain instances, the subject can have one or more of the following diseases or disorders disruptive behavior disorders, a pervasive developmental disorder, a disease causing dementia, or an autoimmune disease of the digestive tract. In other instances, the subject can have one or more of the following diseases or disorders ADD, Autism, Alzheimer's disease, Parkinson's disease, Huntington's disease, Celiac disease, or an inflammatory bowel disease. In still other instances, the subject can have one or more of an infection, a fever, trauma-induced neuroinflammation, brain inflammation, or reduced cognition. In certain instances, neuroinflammation may or may not be caused by the one or more diseases or disorders. In certain instances, cognitive impairment may or may not be caused by the one or more diseases or disorders.

In any of the methods described herein, the subject may have experienced trauma, by a single incident (e.g., an isolated injury), or by multiple incidents (e.g., repeated or repetitive injuries). In certain instances, the neuroinflammation may or may not be caused by the trauma. In certain instances, the cognitive impairment may or may not be caused by the trauma.

In any of the methods described herein, the subject may have had or has a head injury or trauma, a fever, cancer therapy (e.g., chemotherapy), a neck injury or trauma, or a spinal cord injury or trauma. In certain instances, the neuroinflammation may or may not be caused by one or more of the aforementioned incidents. In certain instances, cognitive impairment may or may not be caused by one of the aforementioned incidents.

### Optional Additional Sialylated or Fucosylated Human Milk Oligosaccharides

In addition to the 2FL described above, the nutritional compositions may optionally include additional sialylated or fucosylated human milk oligosaccharides. The additional human milk oligosaccharide(s) used in the nutritional composition may be isolated or enriched from milk(s) secreted by mammals including, but not limited to: human, bovine, ovine, porcine, or caprine species. The human milk oligosaccharides may also be produced via microbial fermentation, enzymatic processes, chemical synthesis, or combinations thereof.

Suitable sialylated human milk oligosaccharides for optional use in the nutritional compositions include at least one sialic acid residue in the oligosaccharide backbone. The sialylated human milk oligosaccharide may include two or more sialic acid residues also. Specific non-limiting examples of sialylated human milk oligosaccharides for use in the present disclosure include sialyl oligosaccharides, sialic acid (e.g., free sialic acid, lipid-bound sialic acid, protein-bound sialic acid), lactosialotetraose, 3'-Sialyl-3-fucosyllactose, Disialomonofucosyllacto-N-neohexaose, Monofucosylmonosialyllacto-N-octaose (sialyl Lea), Sialyllacto-N-fucohexaose II, Disialyllacto-N-fucopentaose II, Monofucosyldisialyllacto-N-tetraose), sialyl fucosyl oligosaccharides, 2'-Sialyllactose, 2-Sialyllactosamine, 3'-Sialyllactose, 3'-Sialyllactosamine, 6'-Sialyllactose, 6'-Sialyllactosamine, Sialyllacto-N-neotetraose c, Monosialyllacto-N-hexaose, Disialyllacto-N-hexaose I, Monosialyllacto-N-neohexaose I, Monosialyllacto-N-neohexaose II, Disialyllacto-N-neohexaose, Disialyllacto-N-tetraose, Disialyllacto-N-hexaose II, Sialyllacto-N-tetraose a, Disialyllacto-N-hexaose I, Sialyllacto-N-tetraose b, sialyl-lacto-N-tetraose a, sialyl-lacto-N-tetraose b, sialyl-lacto-N-tetraose c, sialyl-fucosyl-lacto-N-tetraose I, sialyl-fucosyl-lacto-N-tetraose II, disialyllacto-N-tetraose, and combinations thereof.

Specific non-limiting examples of additional optional fucosylated human milk oligosaccharides for use in the present disclosure include fucosyl oligosaccharides, Lacto-N-fucopentaose I, Lacto-N-fucopentaose II, 3'-Fucosyllactose, Lacto-N-fucopentaose III, Lacto-N-difucohexaose I, Lactodifucotetraose, monofucosyllacto-N-hexaose II, isomeric fucosylated lacto-N-hexaose (1), isomeric fucosylated lacto-N-hexaose (3), isomeric fucosylated lacto-N-hexaose (2), difucosyl-para-lacto-N-neohexaose, difucosyl-para-lacto-N-hexaose, difucosyllacto-N-hexaosemonofucosyllacto-neoocataose, monofucosyllacto-N-ocataose, difucosyllacto-N-octaose I, difucosyllacto-N-octaose II, difucosyllacto-N-neoocataose II, difucosyllacto-N-neoocataose I, lacto-N-fucopentaose V, lacto-N-decaose, trifucosyllacto-N-neooctaose, trifucosyllacto-N-octaose, trifucosyl-iso-lacto-N-octaose, lacto-N-difuco-hexaose II, and combinations thereof.

Other suitable examples of human milk oligosaccharides that may be included in the nutritional compositions for use in the methods of the present disclosure include lacto-N-hexaose, para-lacto-N-hexaose, lacto-N-neohexaose, para-lacto-N-neohexaose, lacto-N-neoocataose, para-lacto-N-octanose, iso-lacto-N-octaose, lacto-N-octaose, and combinations thereof.

The sialylated and fucosylated human milk oligosaccharides (exclusive of 2FL) may be present in the nutritional compositions in a total amount of human milk oligosaccharide in the composition (mg of human milk oligosaccharide per mL of composition as consumed/administered or as suitable for consumption/administration) of at least about 0.001 mg/mL, at least about 0.01 mg/mL, from about 0.001 mg/mL to about 20 mg/mL, from about 0.01 mg/mL to about 20 mg/mL, from 0.001 mg/mL to about 10 mg/mL, from about 0.01 mg/mL to about 10 mg/mL, from 0.001 mg/mL to about 5 mg/mL, from about 0.01 mg/mL to about 5 mg/mL, from about 0.001 mg/mL to about 1 mg/mL, from about 0.001 mg/mL to about 0.23 mg/mL, or from about 0.01 mg/mL to about 0.23 mg/mL of total human milk oligosaccharide in the composition. In certain instances, the amount of specific sialylated human milk oligosaccharide and/or fucosylated human milk oligosaccharide (exclusive of 2FL) present in the composition will depend on the specific human milk oligosaccharide or human milk oligosaccharides present and the amounts of other components in the nutritional compositions, including the amounts of any optional human milk oligosaccharides. Synthetic (i.e., non-human or animal sourced) HMOs are preferably used in the methods disclosed herein.

### Macronutrients

The nutritional compositions including 2FL and suitable for use in the methods disclosed herein may be formulated to include at least one of fat, protein, and carbohydrate. In certain aspects of the invention, the nutritional compositions will include 2FL along with fat, protein, and carbohydrate.

Although total concentrations or amounts of the fat, protein, and carbohydrates may vary depending upon the product type (i.e., human milk fortifier, preterm infant formula, infant formula, pediatric formula, adult formula, medical formula, etc.), product form (i.e., nutritional solid, powder, ready-to-feed liquid, or concentrated liquid) and targeted dietary needs of the intended user, such concentrations or amounts can generally fall within one of the following embodied ranges, inclusive of any other fat, protein, and/or carbohydrate ingredients as described herein.

For infant and adult formulas in a liquid form (which should be understood to include any and all of liquids that are ready-to-consume or ready-to-feed, concentrated liquids that have been diluted for consumption/administration, and powders that have been reconstituted into liquids for consumption/administration), carbohydrate concentrations can range from about 5% to about 40%, from about 7% to about 30%, or from about 10% to about 25%, by weight; fat concentrations can range from about 1% to about 30%, from about 2% to about 15%, or from about 3% to about 10%, by weight; and protein concentrations can range from about 0.5% to about 30%, from about 1 % to about 15%, or from about 2% to about 10%, by weight.

The amount of fats, proteins, and/or carbohydrates in any of the liquid nutritional compositions described herein may also be characterized in addition to, or in the alternative, as a percentage of total calories in the liquid nutritional composition as set forth in the following table. These macronutrients for liquid nutritional compositions (which should be understood to include any and all of liquids that are ready-to-consume or ready-to-feed, concentrated liquids that have been diluted for consumption/administration, and powders that have been reconstituted into liquids for consumption/administration) of the present disclosure can be formulated within any of the caloric ranges described in the following table.

| Nutrient | % Total Cal. | % Total Cal. | % Total Cal. |
|---|---|---|---|
| Carbohydrate | From about 0 to about 98 | From about 2 to about 96 | From about 10 to about 75 |
| Protein | From about 0 to about 98 | From about 2 to about 96 | From about 5 to about 70 |
| Fat | From about 0 to about 98 | From about 2 to about 96 | From about 20 to about 85 |

| Nutrient | % Total Cal. | % Total Cal. | % Total Cal. |
|---|---|---|---|
| Carbohydrate | From about 30 to about 50 | From about 25 to about 50 | From about 25 to about 50 |
| Protein | From about 15 to about 35 | From about 10 to about 30 | From about 5 to about 30 |
| Fat | From about 35 to about 55 | From about 1 to about 20 | From about 2 to about 20 |

In some examples, infant formulas (ready-to-feed, concentrated liquids and powders) include a protein component which can comprise from about 7.5% to about 25% of the total caloric content of the formula; the carbohydrate component may comprise from about 35% to about 50% of the total caloric content of the infant formula; and the fat component may comprise from about 30% to about 60% of the total caloric content of the infant formula. These ranges are provided as examples only, and are not intended to be limiting. Additional suitable ranges are noted in the following table.

| Nutrient | % Total Cal. | % Total Cal. | % Total Cal. |
|---|---|---|---|
| Carbohydrates | From about 20 to about 85 | From about 30 to about 60 | From about 35 to about 55 |
| Fat | From about 5 to about 70 | From about 20 to about 60 | From about 25 to about 50 |
| Protein | From about 2 to about 75 | From about 5 to about 50 | From about 7 to about 40 |

When the nutritional composition is a powdered preterm or term infant formula, the protein component can be present in an amount of from about 5% to about 35%, from about 8% to about 12%, or from about 10% to about 12% by weight of the preterm or term infant formula; the fat component can be present in an amount of from about 10% to about 35%, from about 25% to about 30%, or from about 26% to about 28% by weight of the preterm or term infant formula; and the carbohydrate component can be present in an amount of from about 30% to about 85%, from about 45% to about 60%, or from about 50% to about 55% by weight of the preterm or term infant formula.

When the nutritional composition is a powdered human milk fortifier the protein component can be, for example, present can be in an amount of from about 1% to about 55%, from about 10% to about 50%, or from about 10% to about 30% by weight of the human milk fortifier; the fat component can be present in an amount of from about 1% to about 30%, from about 1% to about 25%, or from about 1% to about 20% by weight of the human milk fortifier; and the carbohydrate component can be present in an amount of from about 15% to about 75%, from about 15% to about 60%, or about 20% to about 50% by weight of the human milk fortifier.

The total amount or concentration of fat, carbohydrate, and protein, in the powdered nutritional compositions used herein can vary considerably depending upon the selected composition and dietary or medical needs of the intended user. Additional suitable examples of macronutrient concentrations are set forth below. In this context, the total amount or concentration refers to all fat, carbohydrate, and protein sources in the powdered nutritional composition. For powdered nutritional compositions, such total amounts or concentrations can be formulated within any of the embodied ranges described in the following table.

| Nutrient | % Total Cal. | % Total Cal. | % Total Cal. |
|---|---|---|---|
| Carbohydrate | From about 1 to about 85 | From about 30 to about 60 | From about 35 to about 55 |
| Fat | From about 5 to about 70 | From about 20 to about 60 | From about 25 to about 50 |
| Protein | From about 2 to about 75 | From about 5 to about 50 | From about 7 to about 40 |

### Fat

As previously discussed, the nutritional compositions used in the methods of the present disclosure may include a source or sources of fat. Suitable sources of fat for use herein include any fat or fat source that is suitable for use in an oral nutritional composition and is compatible with the elements and features of such compositions. For example, in one specific embodiment, the fat is derived from long chain polyunsaturated fatty acids and/or short chain fatty acids.

Additional non-limiting examples of suitable fats or sources thereof for use in the nutritional compositions described herein include coconut oil, fractionated coconut oil, soybean oil, corn oil, olive oil, safflower oil, high oleic safflower oil, oleic acids (EMERSOL 6313 OLEIC ACID, Cognis Oleochemicals, Malaysia), MCT oil (medium chain triglycerides), sunflower oil, high oleic sunflower oil, palm and palm kernel oils, palm olein, canola oil, marine oils, fish oils, fungal oils, algae oils, cottonseed oils, and combinations thereof.

### Protein

As previously discussed, the nutritional compositions used in the methods of the present disclosure may optionally further comprise protein. Any protein or protein source that is suitable for use in nutritional compositions. In some instances, the protein or protein source can be compatible with the elements and features of such products are sometimes suitable for use in the nutritional compositions.

Non-limiting examples of suitable proteins or sources thereof for use in the nutritional compositions include hydrolyzed, partially hydrolyzed or non-hydrolyzed proteins or protein sources, which may be derived from any known or otherwise suitable source such as milk (e.g., casein, whey), animal (e.g., meat, fish), cereal (e.g., rice, corn), vegetable (e.g., soy, pea) or combinations thereof. Non-limiting examples of such proteins include milk protein isolates, milk protein concentrates as described herein, casein protein isolates, extensively hydrolyzed casein, whey protein, sodium or calcium caseinates, whole cow milk, partially or completely defatted milk, soy protein isolates, soy protein concentrates, intact pea protein concentrates, intact pea protein isolates, hydrolyzed pea protein concentrates, hydrolyzed pea protein isolates, and so forth. In some examples, the nutritional compositions include a protein source derived from milk proteins of human and/or bovine origin.

In certain embodiments, the protein utilizes includes a hydrolyzed protein hydrolysate. In this context, the terms "hydrolyzed protein" or "protein hydrolysates" are used interchangeably herein and include extensively hydrolyzed proteins, wherein the degree of hydrolysis can be at least about 20%, from about 20% to about 80%, from about 30% to about 80%, or from about 40% to about 60%. The degree of hydrolysis is the extent to which peptide bonds are broken by a hydrolysis method. The degree of protein hydrolysis for purposes of characterizing the extensively hydrolyzed protein component of these embodiments is easily determined by one of ordinary skill in the formulation arts by quantifying the amino nitrogen to total nitrogen ratio (AN/TN) of the protein component of the selected liquid formulation. The amino nitrogen component is quantified by USP titration methods for determining amino nitrogen content, while the total nitrogen component is determined by the Tecator Kjeldahl method, all of which are well known methods to one of ordinary skill in the analytical chemistry art.

Suitable hydrolyzed proteins include soy protein hydrolysate, casein protein hydrolysate, whey protein hydrolysate, rice protein hydrolysate, potato protein hydrolysate, fish protein hydrolysate, egg albumen hydrolysate, gelatin protein hydrolysate, combinations of animal and vegetable protein hydrolysates, and combinations thereof. Particularly preferred protein hydrolysates include whey protein hydrolysate and hydrolyzed sodium caseinate.

### Carbohydrate

As previously discussed, the nutritional compositions used in the methods of the present disclosure may further optionally comprise any carbohydrates that in certain instances are suitable for use in a nutritional composition. In some instances, the protein or protein source can be compatible with one or more elements and features of the methods disclosed herein.

Non-limiting examples of suitable carbohydrates or sources thereof for use in the nutritional compositions described herein may include maltodextrin, hydrolyzed or modified starch or cornstarch, glucose polymers, corn syrup, corn syrup solids, rice-derived carbohydrates, pea-derived carbohydrates, potato-derived carbohydrates, tapioca, sucrose, glucose, fructose, lactose, high fructose corn syrup, honey, sugar alcohols (e.g., maltitol, erythritol, sorbitol), artificial sweeteners (e.g., sucralose, acesulfame potassium, stevia) and combinations thereof. In certain instances, the carbohydrate is a low dextrose equivalent (DE) maltodextrin.

### Other Optional Ingredients

The nutritional compositions used in the methods of the present disclosure may further comprise other optional components that may, in certain instances, modify the physical, chemical, aesthetic or processing characteristics of the products or serve as pharmaceutical or additional nutritional components when used in the targeted population. Such optional ingredients can be suitable for use in medical food or other nutritional products or pharmaceutical dosage forms. Such optional ingredients may also be used in the nutritional compositions herein, and in certain instances, they can be safe for oral administration and can, for example, be compatible with the other ingredients in the selected product form.

Non-limiting examples of such optional ingredients include preservatives, emulsifying agents, buffers, fructooligosaccharides, galactooligosaccharides, polydextrose, prebiotics, probiotics, pharmaceutical actives, anti-inflammatory agents, additional nutrients as described herein, colorants, flavors, thickening agents and stabilizers, lubricants, and so forth.

The nutritional compositions may further comprise a sweetening agent, including but not limited to at least one sugar alcohol (e.g., maltitol, erythritol, sorbitol, xylitol, mannitol, isolmalt, and lactitol), at least one artificial or high potency sweetener (e.g., acesulfame K, aspartame, sucralose, saccharin, stevia, and tagatose), or combinations thereof. These sweetening agents, for example as a combination of a sugar alcohol and an artificial sweetener, can be useful in formulating liquid beverage embodiments having a desirable favor profile. These sweetener combinations can be effective in masking undesirable flavors sometimes associated with the addition of vegetable proteins to a liquid beverage. Optional sugar alcohol concentrations in the nutritional composition may range from at least about 0.01%, from about 0.1% to about 10%, or from about 1 % to about 6%, by weight of the nutritional composition. Optional artificial sweetener concentrations may range from at least about 0.01%, from about 0.05% to about 5%, or from about 0.1% to about 1.0%, by weight of the nutritional composition.

A flowing agent or anti-caking agent may be included in the nutritional compositions as described herein to retard clumping or caking of the powder over time and to make a powder embodiment flow easily from its container. Any known flowing or anti-caking agents that are known or otherwise suitable for use in a nutritional powder or product form are suitable for use herein, non-limiting examples of which include tricalcium phosphate, silicates, and combinations thereof. The concentration of the flowing agent or anti-caking agent in the nutritional composition varies depending upon the product form, the other selected ingredients, the desired flow properties, and so forth, but can range from about 0.1 % to about 4% or from about 0.5% to about 2%, by weight of the nutritional composition.

A stabilizer may also be included in the nutritional compositions. Any stabilizer that is known or otherwise suitable for use in a nutritional composition is also suitable for use herein, some non-limiting examples of which include gums such as xanthan gum. The stabilizer may represent from about 0.1 % to about 5.0%, from about 0.5% to about 3%, or from about 0.7% to about 1.5%, by weight of the nutritional composition.

The nutritional compositions may further comprise any of a variety of other vitamins or related nutrients, non-limiting examples of which include vitamin A, vitamin D, vitamin E, vitamin K, thiamine, riboflavin, pyridoxine, vitamin B12, carotenoids (e.g., beta-carotene, zeaxanthin, lutein, lycopene), niacin, folic acid, pantothenic acid, biotin, vitamin C, choline, inositol, salts and derivatives thereof, and combinations thereof.

The nutritional compositions may further comprise any of a variety of other additional minerals, non-limiting examples of which include calcium, phosphorus, magnesium, iron, zinc, manganese, copper, sodium, potassium, molybdenum, chromium, chloride, and combinations thereof.

Certain examples of the nutritional compositions disclosed herein include nutritional compositions that can be formulated in a manner so as to have a low glycemic index. In certain nutritional compositions disclosed herein that contain carbohydrates, the relative amount and type of the at least one source of carbohydrates, amongst other ingredients, can be adjusted to obtain the desired glycemic index of the nutritional composition. In certain aspects of the nutritional composition, the nutritional composition can have a glycemic index less than or equal to about 50. In other instances, the nutritional composition can have a glycemic index less than or equal to about 40, less than or equal to about 30, less than or equal to about 20, at least about 0, or at least about 1.

The nutritional compositions disclosed herein may also be substantially free of any optional ingredient or feature described herein, provided that the remaining nutritional composition still contains all of the required ingredients or features as described herein. In this context, and unless otherwise specified, the term "substantially free" means that the selected nutritional compositions contain less than a functional amount of the optional ingredient, such as less than about 0.5%, less than about 0.1 % or about zero, by weight of such optional ingredient.

### Methods of Manufacture

The nutritional compositions used in the methods of the present disclosure may be prepared by any known or otherwise suitable manufacturing technique for preparing the selected product solid or liquid form. Many such techniques are known for any given form such as nutritional liquids or powders and can easily be applied by one of ordinary skill in the art to the nutritional compositions described herein.

The nutritional compositions used in the methods of the present disclosure can therefore be prepared by any of a variety of known or otherwise suitable formulation or manufacturing methods. In one suitable manufacturing process, for example, at least three separate slurries are prepared, including a protein-in-fat (PIF) slurry, a carbohydrate-mineral (CHO-MIN) slurry, and a protein-in-water (PIW) slurry. The PIF slurry is formed by heating and mixing the oil (e.g., canola oil, corn oil, etc.) and then adding an emulsifier (e.g., lecithin), fat soluble vitamins, and a portion of the total protein (e.g., milk protein concentrate, etc.) with continued heat and agitation. The CHO-MIN slurry is formed by adding with heated agitation to water: minerals (e.g., potassium citrate, dipotassium phosphate, sodium citrate, etc.), trace and ultra trace minerals (TM/UTM premix), thickening or suspending agents (e.g. avicel, gellan, carrageenan). The resulting CHO-MIN slurry is held for 10 minutes with continued heat and agitation before adding additional minerals (e.g., potassium chloride, magnesium carbonate, potassium iodide, etc.), and/or carbohydrates (e.g., 2FL, fructooligosaccharide, sucrose, corn syrup, etc.). The PIW slurry is then formed by mixing with heat and agitation the remaining protein, if any.

The resulting slurries are then blended together with heated agitation and the pH adjusted to 6.6-7.0, after which the composition is subjected to high-temperature short-time (HTST) processing during which the composition is heat treated, emulsified and homogenized, and then allowed to cool. Water soluble vitamins and ascorbic acid are added, the pH is adjusted to the desired range if necessary, flavors are added, and water is added to achieve the desired total solid level. The composition is then aseptically packaged to form an aseptically packaged nutritional emulsion. This emulsion can then be further diluted, heat-treated, and packaged to form a ready-to-feed or concentrated liquid, or it can be heat-treated and subsequently processed and packaged as a reconstitutable powder, e.g., spray dried, drymixed, agglomerated.

The nutritional solid, such as a spray dried nutritional powder or drymixed nutritional powder, may be prepared by any collection of known or otherwise effective technique, suitable for making and formulating a nutritional powder.

For example, when the nutritional powder is a spray dried nutritional powder, the spray drying step may likewise include any spray drying technique that is known for or otherwise suitable for use in the production of nutritional powders. Many different spray drying methods and techniques are known for use in the nutrition field, all of which are suitable for use in the manufacture of the spray dried nutritional powders herein.

One method of preparing the spray dried nutritional powder comprises forming and homogenizing an aqueous slurry or liquid comprising predigested fat, and optionally protein, carbohydrate, and other sources of fat, and then spray drying the slurry or liquid to produce a spray dried nutritional powder. The method may further comprise the step of spray drying, drymixing, or otherwise adding additional nutritional ingredients, including any one or more of the ingredients described herein, to the spray dried nutritional powder.

Other suitable methods for making nutritional compositions are described, for example, in U.S. Pat. No. 6,365,218 (Borschel, et al.) (which is herein incorporated by reference to the extent that it is consistent herewith), U.S. Pat. No. 6,589,576 (Borschel, et al.) (which is herein incorporated by reference to the extent that it is consistent herewith), U.S. Pat. No. 6,306,908 (Carlson, et al.) (which is herein incorporated by reference to the extent that it is consistent herewith), and U.S. Patent Application No. 20030118703 A1 (Nguyen, et al.) (which is herein incorporated by reference to the extent that it is consistent herewith).

### EXAMPLE SET A

One objective of this example set was to determine if mice fed a diet comprising 2FL were able to ameliorate the behavioral alterations induced by the administration of LPS; LPS can be an inductor of systemic inflammation and neuroinflammation, as discussed below.

Lipopolysaccharide (LPS), a potent bacterial endotoxin, exerts marked effects on neuronal function. LPS can produce a wide range of non-specific behavioral effects collectively termed sickness behaviors. Such behaviors can include, for example, a reduction in activity and exploration, decreased social interaction, fever, a reduction in consumption of food and drink, hypersomnia, activation of the hypothalamic-pituitary-adrenal axis, and increased sympathetic activation. LPS has also been shown to inhibit various forms of learning and memory function through the suppression of long term potentiation (LTP) in the hippocampus. The exact mechanism of action by LPS in the central nervous system (CNS) remains unclear, but peripherally administrated LPS can induce a myriad of effects in the CNS (one such effect seems to be its ability to increase the level of the cytokine IL-1β in the CNS). Peripherally administrated LPS is considered an animal model of CNS neuroinflammation induced by peripheral stimuli.

### MATERIALS AND METHODS

***Animals and Diets.*** Fifty six male C57/BL6 mice (three months old) were supplied by Janvier (France) and housed in an ambient-controlled room (22±1 °C, 50±10% humidity, 12 h LD cycle (lights on 7:30-19:30)). Animals were randomly divided into four experimental groups (n=14 each). Two groups received ad libitum access to the control diet, AIN-93M rodent diet (Reeves et al., "AIN93 purified diets for laboratory rodents: final report of the American Institute of Nutrition ad hoc writing committee of the reformulation of the AIN76A rodent diet" J Nutr. (1993) Vol. 123, pp. 1939-51). The AIN-93M rodent diet had 12.89% protein, 69.7% carbohydrates, and 4.10% fat; the percent is weight percent relative to the total weight of the diet. The other two groups received the same diet supplemented with 0.312% (percent relative to the total weight of diet) 2-fucosyl-lactose (2FL) (supplied by Inalco, Italy). The supplemented diets provided about 350 mg 2FL/day/kg body weight. After six weeks of feeding the experimental diets, a glass-covered transponder with unique ID codes (T) was injected subcutaneously in the interscapular area of each mouse under isoflurane anesthesia.

Twenty-four hours after transponder implantation, mice from each experimental group (n=14) were placed into an IntelliCage™ system for assessment of behavior (one cage per group). Mice were allowed to habituate in the IntelliCage™ system and then LPS or saline were administered (intraperitoneous injection) to the experimental groups and the cognitive consequences were evaluated.

***IntelliCage™ Apparatus and Methods.*** IntelliCage™ (NewBehavior AG) is a computer-based, fully automated testing apparatus used to analyze the spontaneous and learning behavior of radio-frequency identification (RFID)-tagged mice in a cage. A large standard plastic cage was equipped with four triangular operant learning chambers (corners) that fit into each corner of the cage. RFID readers, and other types of sensor allowed simultaneous monitoring of up to 16 transponder-tagged mice living in the same cage. Mice were allowed to enter a corner (corner visit) through a short narrow tunnel that functions as an RFID antenna. In the particular unit utilized, only one mouse could enter a corner at a time because of the limited size of the corner and tunnel. In the inner space of the corner, were two nosepoke holes with an infrared beam-break response detector. The "correct" nosepoke triggers the opening of a motorized access gate to water-bottle nipples (gate). The time and duration of each behavioral event (corner visit, nosepoke, and lick), mouse ID, and corner ID was automatically recorded through RFID readers, infrared sensors, and lickometers. The IntelliCage™ testing apparatus allows for different protocols to be configured by the user in order to run different trials for testing several animal behaviors which reflect different processes related to exploratory capabilities, learning, and memory skills.

***Lipopolysaccharide (LPS) treatment**.* LPS from *E***.** *coli* 055:B5 was supplied by SIGMA. Injections of LPS or saline were given at 17:00, 2.5 hours before dark phase. The dark phase is the active period for mice. LPS or saline treatment were given according to the following scheme:

A - Control plus LPS group: The mice in this group were fed with the control diet and i.p. (intraperitoneal) injected with LPS (100 micrograms/kg body weight)

B - Control plus saline group: The mice in this group were fed with the control diet and i.p. injected with saline.

C - 2FL plus LPS group: The mice in this group were fed with the 2FL-supplemented diet and i.p. injected with LPS (100 micrograms/kg body weight).

D - 2FL plus saline group: The mice in this group were fed with the 2FL-supplemented diet and i.p. injected with saline.

### RESULTS

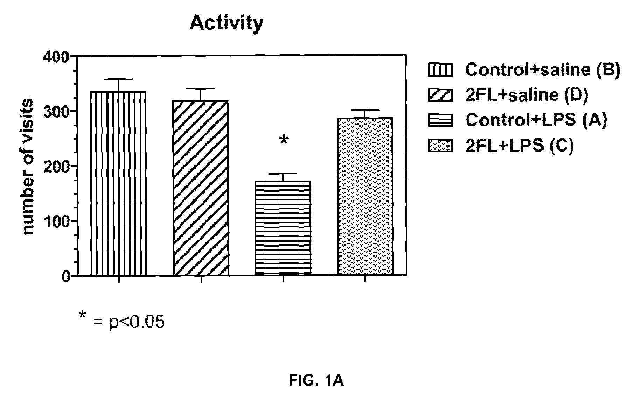

**Figure 1A** is a graph showing activity (measured as the total number of visits to the different corners of the IntelliCage™) for each of the four different treatments of the mice groups, A-D as described in Example Set A. An asterisk (*) is used to indicate a statistical difference (p<0.05) between that data point and the control plus saline group data point.

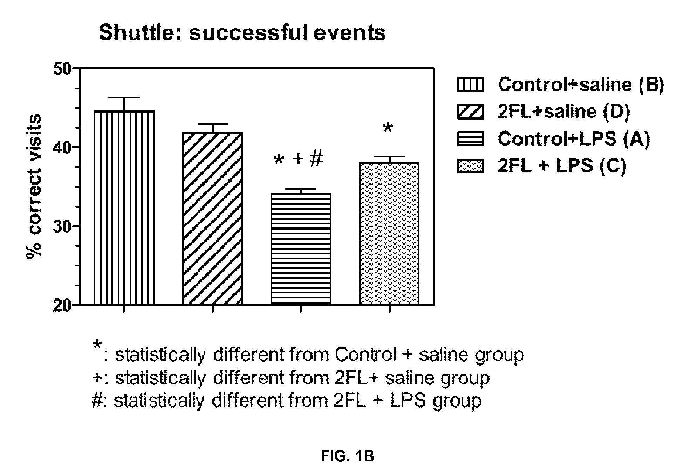

**Figure 1B** is a graph showing the percentage of correct visits (the percentage of correct visits out of total number of visits to the different corners of the IntelliCage™) for each of the four different treatments of the mice groups, A-D as described in Example Set A. An asterisk (*) is used to indicate a statistical difference (p<0.05) between that data point and the control plus saline group data point. A plus (+) is used to indicate a statistical difference (p<0.05) between that data point and the 2FL plus saline group data point. A pound (#) is used to indicate a statistical difference (p<0.05) between that data point and the 2FL plus LPS group data point.

As shown in FIG. 1A, the activity of the mice, measured as total number of visits of the animals to the different corners of the IntelliCage™, was decreased by administration of LPS (C versus A). However, FIG. 1A also indicates that feeding with 2FL was able to prevent this sickness behavior induced by LPS (D versus C).

The shuttle protocol in the Intellicage™ has been reported as a cognitive test related to executive function (Endo et al., "Automated test of behavioral flexibility in mice using a behavioral sequencing task in IntelliCage" Behavioural Brain Research (2011) Vol. 221, No. 1, pp. 172-181). The percentage of correct visits indicates a lack of cognitive impairment. The data in FIG. 1B show that mice fed on the control diet challenged with injected LPS (C) showed a significantly lower percentage of correct visits in the Intellicage™, as compared to the control with injections with saline (A). However, when the diet was supplemented with 2FL, the decrease in the percent of correct visits by LPS injection was reduced (D versus C). Thus, systemic administration of LPS appeared to cause marked sickness behavior in mice which was reflected by the decrease in the activity and exploratory behavior of LPS-treated mice. Likewise, systemic administration of LPS appeared to cause cognitive impairment, thereby inducing a reduction in learning processes related to executive function. Oral feeding with 2FL was effective in treating these behavioral symptoms caused by neuroinflammation: feeding with 2FL alleviated or prevented the LPS-induced sickness behavior and appeared to counteract the cognitive impairment related to executive function induced by LPS.

### EXAMPLE SET B

One objective of this example set was to determine the associative learning effects of 2FL administered to LPS-injected adult rats.

### MATERIALS AND METHODS

*Animals **and** groups.* Twenty-two male adult (2.5 month old upon their arrival) Sprague Dawley rats were used in these experiments. Animals weighed 300-350 g upon their arrival to the animal facility. Animals were placed in individual cages with food and water ad libitum and kept on a 12/12 h light/dark cycle with constant ambient temperature (22 ± 1 °C) and humidity (50 ± 7%). All the tests were carried out during the light cycle. Four groups of animals were used:

- *Control-Saline Group,* animals (n = 5) were fed a control rodent AIN-93M diet and intraperitoneally (i.p.) injected with saline;

- *Control-LPS Group,* animals (n=5) were fed a control rodent AIN-93M diet and i.p. injected with LPS from E. coli O55:B5 (100 micrograms/kg body weight);

- *2FL-Saline Group,* animals (n=6) were fed a rodent AIN-93M diet supplemented with 2FL (the supplemented diets provided about 350 mg 2FL/day/kg body weight) and i.p. injected with saline; and

- *2FL-LPS Group,* animals (n = 6) were fed a rodent AIN-93M diet supplemented with 2FL (the supplemented diets provided about 350 mg 2FL/day/kg body weight) and i.p. injected with LPS from E. coli O55:B5 (100 micrograms/kg body weight).

***Diets.*** The selected diets were provided to the animals for 35 days before the behavioral tests in the Skinner box, and were maintained during the 10 days that the rats were submitted to the cognitive tests (total of 45 days). LPS was administered for the first four sessions (days) at doses of 100 micrograms/kg body weight dissolved in 300 µl of a saline solution. LPS was administered 3 hours before the corresponding session.

***Instrumental conditioning.*** Training and testing took place in basic Skinner box modules (n = 5) measuring 29.2 × 24.1 × 21 cm (MED Associates, St. Albans, Vermont, USA). The operant chambers were housed within a sound-attenuating chamber (90 × 55 × 60 cm), which was constantly illuminated (19 W lamp) and exposed to a 45 dB white noise (Cibertec, S.A.). Each Skinner box was equipped with a food dispenser from which pellets (MLabRodent Tablet, 45 mg; Test Diet, Richmond, IN, USA) could be delivered upon pressing of a lever by the rat. Before training, rats were handled daily for 7 days and food-deprived to 80-85% of their free feeding weight. Once the desired weight was reached, animals were placed in the Skinner box for 20 min and allowed to press the lever to receive pellets from the food tray using a fixed-ratio (FR 1:1) schedule, until reaching criterion. The selected criterion was to press the lever up to 40 times/session and to repeat the same rate during the following session. Animals were allowed a maximum of 10 days to reach criterion. The start and end of each session was indicated by a tone (2 kHz, 200 ms, 70 dB) provided by the loudspeaker located in the recording chamber.

Conditioning programs, lever presses, and delivered reinforcers were controlled and recorded by a computer, using a MED-PC program (MED Associates).

***Data presentation and statistical analysis.*** Unless otherwise indicated, data are presented as the mean value collected from each experimental group followed by the standard error of the mean (SEM); errors bars in the figures are also determined by the SEM. Graphic displays were constructed with the help of the SPSS package (SPSS Inc, Chicago, Illinois, USA). Statistical differences between experimental groups and their corresponding control were determined with the help of the SPSS package. In particular, possible differences between groups in the Skinner box tests were determined with the help of two-way repeated means of the analysis of variance (ANOVA), the session (days) or the trial being the repeated means factor. The significance level was established at p = 0.05 for all tests.

### RESULTS

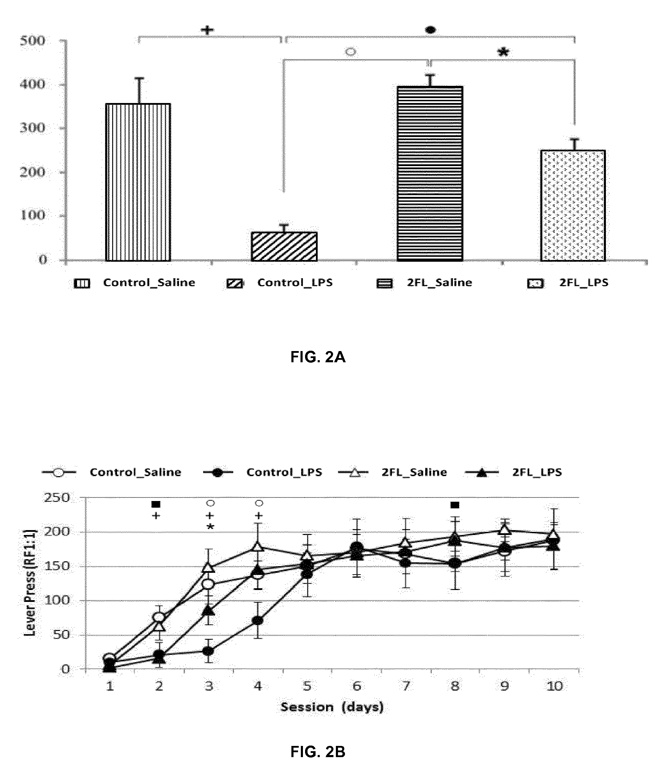

**Figure 2A** is a graph showing performance of the four experimental groups in the fixed-ratio (1:1) schedule used during training in the Skinner box. The figure summarizes the total number of lever presses during the four first sessions. It also shows how LPS treatment decreased (p<0.05) the number of positive behaviors (i.e., pressing the lever to obtain a food reward) compared to both saline treated groups. In addition, feeding with 2FL reduced (p<0.05) the LPS-induced cognitive impairment. The 2FL treatment did not appear able to totally abolish the negative effects of LPS, as the performance of the 2FL-LPS group was still worse as compared to the saline groups.

Note the significant differences (p < 0.05) between groups.

**Figure 2B** is a graph showing performance in the Skinner box of the animals included in the four groups: 1) Control-Saline, white circles; 2) Control-LPS, black circles; 3) 2FL-Saline, white triangles; and 4) 2FL-LPS, black triangles. Illustrated data was collected during a fixed-ratio (1:1) schedule. In this situation, animals had to press the lever just one time to obtain a pellet of food. LPS was administered 3 h before each of the first four sessions.

Significant differences were observed between the Control-Saline and the Control-LPS groups (plus signs, p < 0.05), Control-Saline and 2FL-LPS groups (black squares, p < 0.05), 2FL-Saline and Control-LPS groups (white circles, p < 0.05), and 2FL-Saline and 2FL-LPS groups (asterisk, p < 0.05).

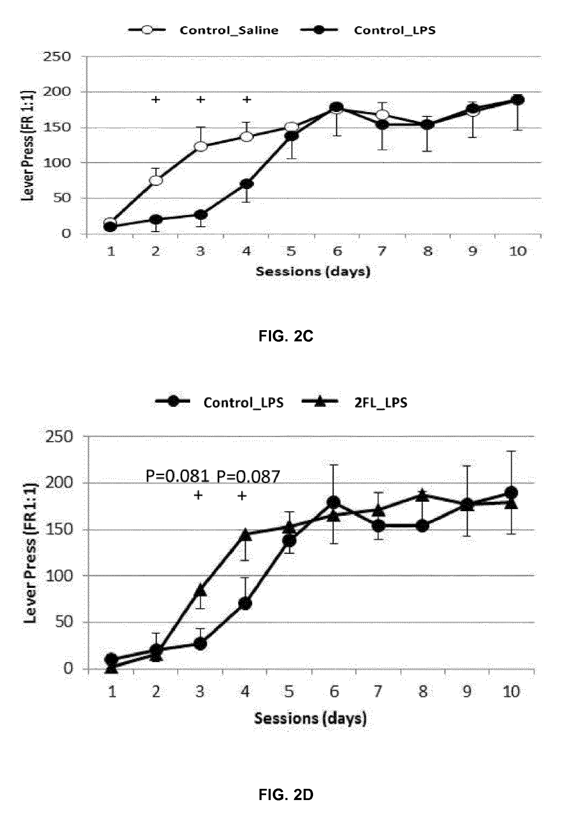

**Figure 2C** is a graph showing performance in the Skinner box of the animals included in the groups Control-Saline, white circles, and Control-LPS, black circles. Illustrated data was collected during a fixed-ratio (1:1) schedule. In this situation, animals had to press the lever just one time to obtain a pellet of food. LPS was administered 3 h before each of the first four sessions. Significant differences were observed between the Control-Saline and the Control-LPS groups at days 2, 3, and 4 (p < 0.05).

**Figure 2D** is a graph showing performance in the Skinner box of the animals included in the groups Control-LPS, black circles, and 2FL-LPS, black triangles. Illustrated data was collected during a fixed-ratio (1:1) schedule. In this situation, animals had to press the lever just one time to obtain a pellet of food. LPS was administered 3 h before each of the first four sessions.

Significant differences were observed between the 2FL-LPS and Control-LPS in the days 3 and 4 at p=0.081 and p=0.087, respectively.

FIG. 2B, FIG. 2C, and FIG. 2D show the evolution of the behaviors related to associative learning during the 10 sessions of the test. FIG. 2B displays the behaviors of all four experimental groups through the 10 days of behavioral assessment. In order to obtain a better understanding of data, FIG. 2C and FIG. 2D show pairs of key comparisons. FIG. 2C shows how the performance of LPS treated (Group 2) rats was significantly worse than control saline animals (Group 1) during the period where LPS was given.

On the other hand, when both LPS treated groups are compared (FIG. 2D), the animals fed 2FL (Group 4) had significantly better behavior that the ones fed on control diet (Group 2) at days 3 and 4 (p=0.081 and 0.087, respectively), demonstrating a preventive effect of oral 2FL supplementation on the negative effects of systemically administered LPS.

Thus, systemically administered LPS appears to reduce the cognitive skills related to associative learning. Feeding with a diet containing 2FL partially prevents the cognitive impairment induced by LPS. 2FL administration helps to compensate the deleterious effects on operant conditioning evoked by LPS administration.

### EXAMPLE SET C

One objective of this example set was to determine the effects of orally administered 2FL on the expression of the glial cell marker, Glial Fibrillary Acidic Protein (GFAP) in different areas of a rat brain.

Microglia are recognized as the innate immune cells of the central nervous system. Microglia can actively survey their environment through their many branched processes, and can change their cell morphology in response to neural injury.

Acute inflammation in the brain can be characterized by rapid activation of microglia. Inflammation can cause the degradation of brain tissue and of the blood brain barrier. During this time, microglia can generate reactive oxygen species and can release molecular signals to recruit peripheral immune cells for an inflammatory response as well as modulate astrocyte functions. Astrocytes are glial cells that are the most abundant cells in the brain. They can be involved in maintenance and support of neurons and compose a significant component of the blood brain barrier. After insult to the brain, such as traumatic brain injury or inflammation, astrocytes may become activated in response to signals released by injured neurons or activated microglia. Once activated, astrocytes may release various growth factors and undergo morphological changes. They can perform many functions, including biochemical support of endothelial cells that form the blood-brain barrier, provision of nutrients to the nervous tissue, maintenance of extracellular ion balance, and a role in the repair and scarring process of the brain and spinal cord following traumatic injuries or acute inflammation.

From the perspective of cognition and neuroinflammation, the study of astrocytes can be useful, since they support neurons, act actively in synaptic plasticity mechanisms, and can be helpful in neuronal functionality and surveillance. Glial fibrillary acidic protein (GFAP) is an intermediate filament of the cytoskeleton that can be used as a marker of the reactive status of astrocytes. Deficiencies in the amount of GFAP can provoke an abnormal myelination, a worsening of white matter, and functional alterations in neuron-astrocyte communication. Also, GFAP helps in nervous tissue repair after damage caused by neuroinflammation, such as acute neuroinflammation.

Thus, the size and morphology of nervous cells can assist in the understanding of their activity as information transmitters and in regeneration, growing and synaptic plasticity mechanisms. In these processes, the cytoskeleton can play a role. In neurons and glial cells, the cytoskeleton is constituted of microtubules and actin microfilaments. Both cell types exhibit intermediate filaments: neurofilaments in neurons and GFAP in glial cells. Consequently, the study of cellular GFAP can be an indicator of the functional status of glial cells.

### MATERIALS AND METHODS

***Animals** -* Thirty young adult male Sprague Dawley rats of about 250 g body weight were supplied by Janvier (France). Animals were placed in pairs with food and water ad libitum and kept on a 12/12 h light/dark cycle with constant ambient temperature (22 ± 1 °C) and humidity (50 ± 7%). Half of the rats were fed a pelletized standard AIN-96M control diet (n=15) and the other half were fed on the same diet supplemented with 2FL (n=15) (the supplemented diets provided about 350 mg 2FL/day/kg body weight). Rats were fed with experimental diets during 5 weeks before extracting tissues for analysis.

***Tissue processing** -* For histochemical procedures, the brains from 5 control and 5 treated rats were extracted and processed as follows: deeply anaesthetized animals (ketamine: 100 mg/kg body weight, i.p.; and xylazine: 5 mg/kg body weight, i.p.) were perfused through the left ventricle with 250 ml 0.01 M phosphate-buffered saline (PBS; pH 7.4), and then with 300 ml of 4% paraformaldehyde in 0.1 M phosphate buffer (PB). The brains were removed and then postfixed for a further 4 h in the same fixative at room temperature. Samples were then cryoprotected by immersion overnight at 4°C in 0.1 M PB containing 30% sucrose. After that, the brains were embedded in Optimal Cutting Temperature (OCT) medium (Sakura Finetek) and frozen in 2-methylbutane pre-chilled in liquid nitrogen. Serial rostro-caudal sections (40 µm) were cut using a cryostat (Cryocut 1800. Reichert Jung, Wetzlar, Germany).

For biochemical techniques, animals (10 control and 10 treated) were sacrificed by cervical cerebral dislocation. The frontal cortex, striatum, and hippocampus of the rat brains were dissected on ice, flash-frozen with liquid nitrogen and stored at -80°C.

***Immunohistochemistry** -* Free-floating sections were incubated for 4 h in PBS containing 0.1% Triton X-100, and then in rabbit anti-GFAP, 1:750 (Dako, Glostrup Denmark) antisera diluted in PBS containing 0.2% Triton X-100, overnight at 4°C. After several rinses in PBS, the sections were incubated with biotinylated goat anti-rabbit IgG and processed by the avidin-biotin peroxidase complex (ABC) procedure (Pierce, Rockford, IL, USA). The peroxidase activity was demonstrated following the nickel-enhanced diaminobenzidine assay.

Control procedures were carried out on adjacent sections of the same tissues. No immunolabelling was detected when the primary antibody was either omitted or replaced with an equivalent concentration of preimmune serum. Sections were then mounted on slides, dehydrated, and covered using DPX (Fluka, Madrid, Spain).

***Histochemistry** -* Free-floating sections were incubated for 4 h in PBS containing 0.1% Triton X-100. After several washes in 0.1 M Tris-HCl, pH 7.4 buffer, they were incubated in the dark, for 45 min at 37°C, in 0.1 M Tris-HCl, pH 7.4, containing 1 mM β-NADPH and 2 mM NBT (in 70% dimethylformamide). The sections were then washed twice with 0.1 M Tris-HCl, pH 7.4, quickly dehydrated in a graded ethanol series, cleared and mounted in DPX (Fluka, Madrid, Spain).

*Protein extraction -* For protein extracts, the tissue samples were homogenized in 1/3 (w/v) homogenization buffer consisting of 30 mM Tris-HCl (pH 7.4) containing 1% NP-40, 0.5 mM phenymethylsulfonyl fluoride, protease and phosphatase inhibitors. The resulting homogenates were centrifuged for 40 min at 30,000 g. All procedures were performed at 4°C. The protein concentration was determined by the Bradford method.

***Western-blot* -** Equal amounts of protein extract (nNOS, eNOS, p-CaMKII, mTOR: 60 µg; GFAP: 20 µg) were loaded and separated on 4% to 12% polyacrylamide gradient gels (Invitrogen). Proteins were transferred to PolyVinyliDene Fluoride (PVDF) membranes (Amersham). The PVDF membranes were blocked and incubated overnight at 4°C with diluted policlonal anti PSD-95 (Abcam, 1:1500), anti-neuronal NOS (nNOS, gift from V. Riveros-Moreno of Welcome Research Laboratories, Beckenham, UK, 1:600), endothelial NOS (eNOS, 1:700; Transduction Laboratories), anti-p-CaMKIIα (Thr 286) (1:600, Santa Cruz Biotech., Inc.), anti-p-mTOR(Ser2448) (1:900; Cell Signaling Tech.), and anti-GFAP (1:5,000) in blocking solution. Bound antibody was revealed by means of an enhanced chemiluminescence kit (ECL plus; Amersham). After immunodetection, membranes were probed with anti-α-tubulin (Sigma) as a loading control. The relative amount of the proteins in each sample was quantified by densitometric scanning.

### RESULTS

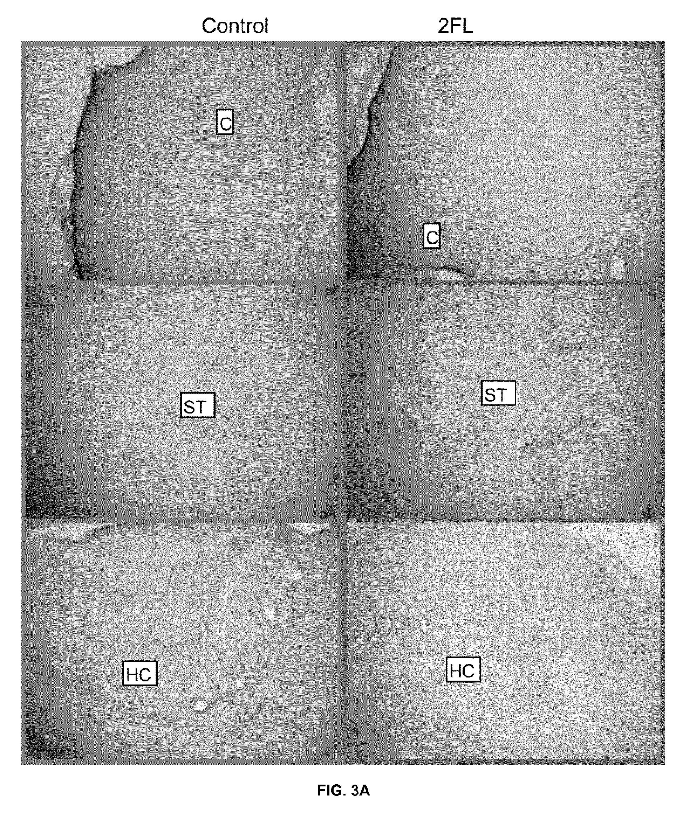

**Figure 3A** is a microphotographies of Glial Fibrillary Acidic Protein (GFAP) immunoreactivity in rat brain rostro-caudal sections. Samples from control are in the left column and 2FL-treated animals are in the right column. C, cerebral cortex (10x); ST, striatum (40x); HC, hippocampus (10x).

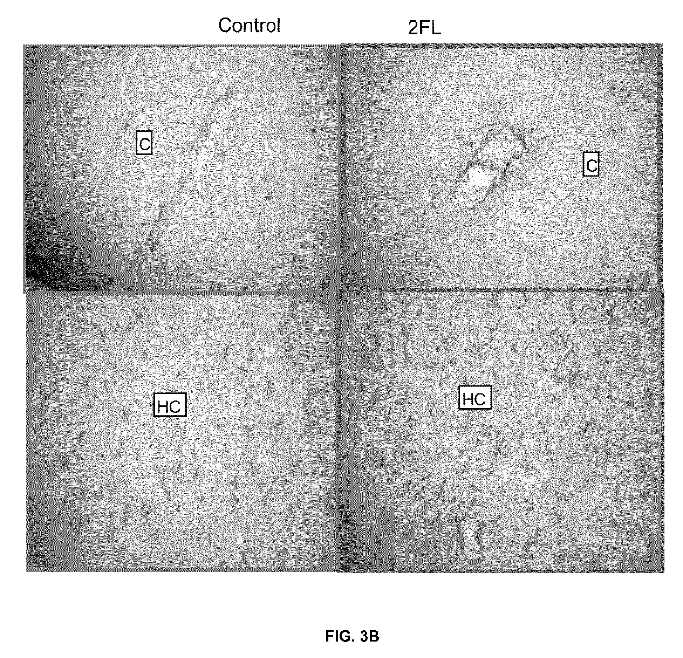

**Figure 3B** is a microphotographies of GFAP immunoreactivity in rat brain rostro-caudal sections. Samples from control are in the left column and 2FL-treated animals are in the right column. C, cerebral cortex (40x); HC, hippocampus (40x).

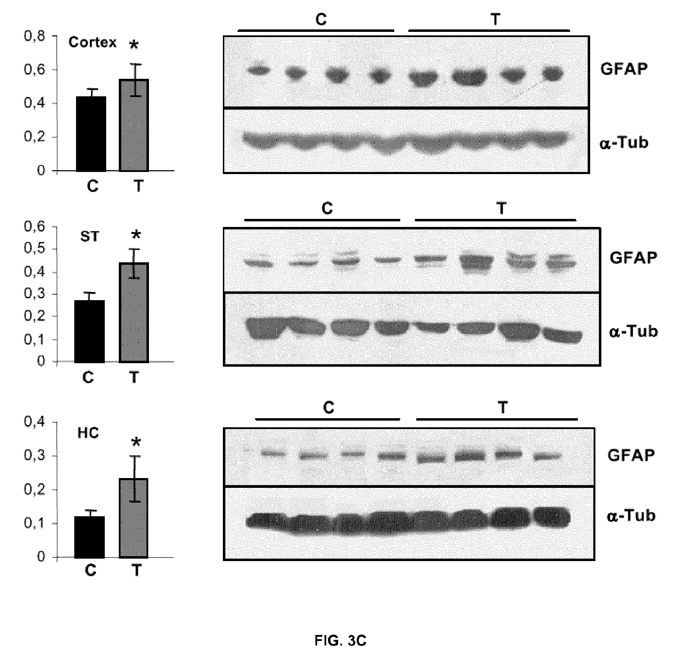

**Figure 3C** shows western blot results of GFAP protein levels in cortex (Cortex), striatum (ST) and hippocampus (HC). It also shows semiquantitative densitometry measurements of GFAP expression in control (C) and 2FL-treated (T) rats. Data represent mean±SD relative to α-tubulin of ten animals. Statistically significant differences from the control group: *p<0.05. A representative immunoblot for GFAP from four control rates and four treated rats is shown.

GFAP-positive astrocytes were found to be distributed within the cerebral cortex, striatum, and hippocampus. The immunoreactivity was slightly higher in the experimental group fed on 2FL diet (FIG. 3A). This result is specially noted in the hippocampus (FIG. 3A and FIG. 3B). GFAP immunostaining appeared to be mainly located in the first layers of the cortex in control rats, whereas in the treated rats, GFAP-positive cells appeared to be uniformly distributed within the cortex.

The GFAP expression was also quantified by western-blot. Brains from rats fed on the 2FL supplemented diet had statistically significant larger amounts of GFAP protein levels in all the cerebral zones analyzed compared to controls (FIG. 3C). This increase in GFAP protein levels indicates that 2FL supplemented diet can assist in the repairing of damaged nervous tissue where the damage was caused, for example, by neuroinflammation.

### EXAMPLE SET D

Examples D1-D5 illustrate ready-to-feed nutritional compositions for use in the methods of the present disclosure, the ingredients of which are listed in the table below. All ingredient amounts are listed as kilogram per 1000 kilogram batch of nutritional composition, unless otherwise specified.

| Ingredient | Ex. D1 | Ex. D2 | Ex. D3 | Ex. D4 | Ex. D5 |
|---|---|---|---|---|---|
| Water | Q.S. | Q.S. | Q.S. | Q.S. | Q.S. |
| Condensed Skim Milk | 86.64 | 86.64 | 86.64 | 86.64 | 86.64 |
| Lactose | 54.80 | 54.80 | 54.80 | 54.80 | 54.80 |
| High oleic safflower oil | 14.10 | 14.10 | 14.10 | 14.10 | 14.10 |
| Soybean oil | 10.6 | 10.6 | 10.6 | 10.6 | 10.6 |
| Coconut oil | 10.1 | 10.1 | 10.1 | 10.1 | 10.1 |
| 2-fucosyl-lactose (2FL) | 0.0948 | 0.090 | 0.085 | 9.479 | 9.005 |
| Galactooligosaccharides (GOS) | 8.63 | 8.63 | 8.63 | 8.63 | 8.63 |
| Whey protein concentrate | 6.40 | 6.40 | 6.40 | 6.40 | 6.40 |
| Potassium citrate | 478.9 g | 478.9 g | 478.9 g | 478.9 g | 478.9 g |
| Calcium carbonate | 448.28 g | 448.28 g | 448.28 g | 448.28 g | 448.28 g |
| Soy lecithin | 355.74 g | 355.74 g | 355.74 g | 355.74 g | 355.74 g |
| Stabilizer | 355.74 g | 355.74 g | 355.74 g | 355.74 g | 355.74 g |
| ARA oil | 368.01 g | 368.01 g | 368.01 g | 368.01 g | 368.01 g |
| Nucleotide/chloride premix | 293.26 g | 293.26 g | 293.26 g | 293.26 g | 293.26 g |
| Potassium chloride | 226.45 g | 226.45 g | 226.45 g | 226.45 g | 226.45 g |
| Ascorbic acid | 445.94 g | 445.94 g | 445.94 g | 445.94 g | 445.94 g |
| Vitamin mineral premix | 142.88 g | 142.88 g | 142.88 g | 142.88 g | 142.88 g |
| DHA oil | 137.8 g | 137.8 g | 137.8 g | 137.8 g | 137.8 g |
| Carrageenan | 180.0 g | 180.0 g | 180.0 g | 180.0 g | 180.0 g |
| Magnesium chloride | 55.0 g | 55.0 g | 55.0 g | 55.0 g | 55.0 g |
| Ferrous sulfate | 58.0 g | 58.0 g | 58.0 g | 58.0 g | 58.0 g |
| Choline chloride | 53.9 g | 53.9 g | 53.9 g | 53.9 g | 53.9 g |
| Vitamin A, D₃, E, K₁ premix | 47.4 g | 47.4 g | 47.4 g | 47.4 g | 47.4 g |
| Citric acid | 29.77 g | 29.77 g | 29.77 g | 29.77 g | 29.77 g |
| Mixed carotenoid premix | 26.40 g | 26.40 g | 26.40 g | 26.40 g | 26.40 g |
| Sodium chloride | AN | AN | AN | AN | AN |
| L-carnitine | 3.31 g | 3.31 g | 3.31 g | 3.31 g | 3.31 g |
| Tricalcium phosphate | 15.65 g | 15.65 g | 15.65 g | 15.65 g | 15.65 g |
| Potassium phosphate monobasic | 13.67 g | 13.67 g | 13.67 g | 13.67 g | 13.67 g |
| Riboflavin | 2.42 g | 2.42 g | 2.42 g | 2.42 g | 2.42 g |
| Potassium hydroxide | AN | AN | AN | AN | AN |

| | | | | | |
|---|---|---|---|---|---|
| AN = as needed | | | | | |

Examples D6-D10 illustrate ready-to-feed nutritional compositions for use in the methods of the present disclosure, the ingredients of which are listed in the table below. All ingredient amounts are listed as kilogram per 1000 kilogram batch of product, unless otherwise specified.

| Ingredient | | Ex. D6 | Ex. D7 | Ex. D8 | Ex. D9 | Ex. D10 |
|---|---|---|---|---|---|---|
| Water | | Q.S. | Q.S. | Q.S. | Q.S. | Q.S. |
| Condensed Skim Milk | | 86.64 | 86.64 | 86.64 | 86.64 | 86.64 |
| Lactose | | 54.80 | 54.80 | 54.80 | 54.80 | 54.80 |
| High oleic safflower oil | | 14.10 | 14.10 | 14.10 | 14.10 | 14.10 |
| Soybean oil | | 10.6 | 10.6 | 10.6 | 10.6 | 10.6 |
| Coconut oil | | 10.1 | 10.1 | 10.1 | 10.1 | 10.1 |
| HMO Mixture | | 0.0948 | 0.0901 | 0.0853 | 9.479 | 9.0047 |
| | 6-sialyl-lactose (6SL) | 0.0316 | 0.0300 | 0.0284 | 0 | 0 |
| | 2-fucosyl-lactose (2FL) | 0.0316 | 0.0300 | 0.0284 | 3.159 | 3.002 |
| | Lacto-N-neotetraose (LNnT) | 0.0316 | 0.0300 | 0.0284 | 0 | 0 |
| Galactooligosaccharides (GOS) | | 8.63 | 8.63 | 8.63 | 8.63 | 8.63 |
| Whey protein concentrate | | 6.40 | 6.40 | 6.40 | 6.40 | 6.40 |
| Potassium citrate | | 478.9 g | 478.9 g | 478.9 g | 478.9 g | 478.9 g |
| Calcium carbonate | | 448.28 g | 448.28 g | 448.28 g | 448.28 g | 448.28 g |
| Soy lecithin | | 355.74 g | 355.74 g | 355.74 g | 355.74 g | 355.74 g |
| Stabilizer | | 355.74 g | 355.74 g | 355.74 g | 355.74 g | 355.74 g |
| ARA oil | | 368.01 g | 368.01 g | 368.01 g | 368.01 g | 368.01 g |
| Nucleotide/chloride premix | | 293.26 g | 293.26 g | 293.26 g | 293.26 g | 293.26 g |
| Potassium chloride | | 226.45 g | 226.45 g | 226.45 g | 226.45 g | 226.45 g |
| Ascorbic acid | | 445.94 g | 445.94 g | 445.94 g | 445.94 g | 445.94 g |
| Vitamin mineral premix | | 142.88 g | 142.88 g | 142.88 g | 142.88 g | 142.88 g |
| DHA oil | | 137.8 g | 137.8 g | 137.8 g | 137.8 g | 137.8 g |
| Carrageenan | | 180.0 g | 180.0 g | 180.0 g | 180.0 g | 180.0 g |
| Magnesium chloride | | 55.0 g | 55.0 g | 55.0 g | 55.0 g | 55.0 g |
| Ferrous sulfate | | 58.0 g | 58.0 g | 58.0 g | 58.0 g | 58.0 g |
| Choline chloride | | 53.9 g | 53.9 g | 53.9 g | 53.9 g | 53.9 g |
| Vitamin A, D₃, E, K₁ premix | | 47.40 g | 47.40 g | 47.40 g | 47.40 g | 47.40 g |
| Citric acid | | 29.77 g | 29.77 g | 29.77 g | 29.77 g | 29.77 g |
| Mixed carotenoid premix | | 26.40 g | 26.40 g | 26.40 g | 26.40 g | 26.40 g |
| Sodium chloride | | AN | AN | AN | AN | AN |
| L-carnitine | | 3.31 g | 3.31 g | 3.31 g | 3.31 g | 3.31 g |
| Tricalcium phosphate | | 15.65 g | 15.65 g | 15.65 g | 15.65 g | 15.65 g |
| Potassium phosphate monobasic | | 13.67 g | 13.67 g | 13.67 g | 13.67 g | 13.67 g |
| Riboflavin | | 2.42 g | 2.42 g | 2.42 g | 2.42 g | 2.42 g |
| Potassium hydroxide | | AN | AN | AN | AN | AN |

| | | | | | | |
|---|---|---|---|---|---|---|
| AN = as needed | | | | | | |

The present disclosure should also be understood as including the following as embodiments. 1. A method for treating neuroinflammation, for preventing neuroinflammation, or for reducing neuroinflammation comprising administering to a subject a nutritional composition comprising a therapeutically effective amount of 2FL (2-fucosyl-lactose). 2. The method of claim 1, wherein the method is for treating neuroinflammation and the subject is in need of treatment for neuroinflammmation. 3. The method of claim 1, wherein the method is for preventing neuroinflammation. 4. The method of claim 1, wherein the method is for reducing neuroinflammation and the subject is in need of treatment for neuroinflammmation. 5. The method of any of claims 1-4, wherein the neuroinflammation results in cognitive impairment or could result in cognitive impairment. 6. The method of any of claims 1-5, wherein the method prevents cognition impairment or reduces cognition impairment. 7. A method for treating cognitive impairment, for preventing cognitive impairment, or for reducing cognitive impairment comprising administering to a subject having neuroinflammation a nutritional composition comprising a therapeutically effective amount of 2FL. 8. The method of claim 7, wherein the method is for treating cognitive impairment and the subject is in need of treatment for cognitive impairment. 9. The method of claim 7, wherein the method is for preventing cognitive impairment. 10. The method of claim 7, wherein the method is for reducing cognitive impairment and the subject is in need of treatment for cognitive impairment. 11. The method of any of claims 1-10, wherein the subject is a human. 12. The method of any of claims 1-11, wherein the subject has chronic neuroinflammation. 13. The method of any of claims 1-12, wherein the subject has one or more of the following diseases or disorders: disruptive behavior disorders, a pervasive developmental disorder, a disease causing dementia, or an autoimmune disease of the digestive tract. 14. The method of any of claims 1-13, wherein the subject has one or more of the following diseases or disorders: ADD, Autism, Alzheimer's disease, Parkinson's disease, Huntington's disease, Celiac disease, or an inflammatory bowel disease. 15. The method of any of claims 1-14, wherein the subject has one or more of an infection, a fever, trauma-induced neuroinflammation, brain inflammation, or reduced cognition. 16. The method of any of claims 1-15, wherein the therapeutically effective amount of 2FL is from about 25 mg/kg bodyweight to about 1000 mg/kg bodyweight. 17. The method of any of claims 1-16, wherein the nutritional composition is a liquid comprising from about 0.001 mg/mL to about 20 mg/mL of 2FL. 18. The method of any of claims 1-17, wherein the nutritional composition is a powder comprising from about 0.0005% to about 5% of 2FL by weight of the powder. 19. The method of any of claims 1-18, wherein the nutritional composition further comprises one or more of a fat, a protein, or a carbohydrate. 20. The method of any of claims 1-19, wherein the subject is a human and has an age of not more than about 20 years old. 21. The method of any of claims 1-19, wherein the subject is a human and has an age from about 20 years old to about 40 years old. 22. The method of any of claims 1-19, wherein the subject is a human and has an age of not less than about 40 years old.

The headings used in the disclosure are not meant to suggest that all disclosure relating to the heading is found within the section that starts with that heading. Disclosure for any subject may be found throughout the specification.

It is noted that terms like "preferably," "commonly," and "typically" are not used herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

As used in the disclosure, "a" or "an" means one or more than one, unless otherwise specified. As used in the claims, when used in conjunction with the word "comprising" the words "a" or "an" means one or more than one, unless otherwise specified. As used in the disclosure or claims, "another" means at least a second or more, unless otherwise specified. As used in the disclosure, the phrases "such as", "for example", and "e.g." mean "for example, but not limited to" in that the list following the term ("such as", "for example", or "e.g.") provides some examples but the list is not necessarily a fully inclusive list. The word "comprising" means that the items following the word "comprising" may include additional unrecited elements or steps; that is, "comprising" does not exclude additional unrecited steps or elements.

Detailed descriptions of one or more aspects, instances, or embodiments are provided herein. It is to be understood, however, that the present invention may be embodied in various forms. Therefore, specific details disclosed herein (even if designated as preferred or advantageous) are not to be interpreted as limiting, but rather are to be used as an illustrative basis for the claims and as a representative basis for teaching one skilled in the art to employ the present invention in any appropriate manner. Indeed, various modifications of the invention in addition to those described herein will become apparent to those skilled in the art from the foregoing description and the accompanying figures. Such modifications are intended to fall within the scope of the appended claims.

## Claims

1. A nutritional composition comprising a therapeutically effective amount of 2FL (2-fucosyl-lactose) for use in the treatment, prevention or reduction of neuroinflammation.

2. The nutritional composition of claim 1 for use in the treatment of neuroinflammation of a subject in need of treatment for neuroinflammmation.

3. The nutritional composition of claim 1 for use in the prevention of neuroinflammation.

4. The nutritional composition of claim 1 for use in the reduction of neuroinflammation of a subject in need of treatment for neuroinflammmation.

5. The nutritional composition for use of any of claims 1-4, wherein the neuroinflammation results in cognitive impairment or could result in cognitive impairment.

6. The nutritional composition for use of claims 1-5, wherein the treatment prevents cognition impairment or reduces cognition impairment.

7. A nutritional composition comprising a therapeutically effective amount of 2FL for use in the treatment, prevention, or reduction of cognitive impairment.

8. The nutritional composition of claim 7 for use in the treatment of cognitive impairment of a subject in need of treatment for cognitive impairment.

9. The nutritional composition of claim 7 for use in the prevention of cognitive impairment.

10. The nutritional composition of claim 7 for use in the reduction of cognitive impairment of a subject in need of treatment for cognitive impairment.

11. The nutritional composition for use of any of claims 1-10, wherein the subject is a human.

12. The nutritional composition for use of any of claims 1-11, wherein the subject has chronic neuroinflammation.

13. The nutritional composition for use of any of claims 1-12, wherein the subject has one or more of the following diseases or disorders: disruptive behavior disorders, a pervasive developmental disorder, a disease causing dementia, or an autoimmune disease of the digestive tract.

14. The nutritional composition for use of any of claims 1-13, wherein the subject has one or more of the following diseases or disorders: ADD, Autism, Alzheimer's disease, Parkinson's disease, Huntington's disease, Celiac disease, or an inflammatory bowel disease.

15. The nutritional composition for use of any of claims 1-14, wherein the subject has one or more of an infection, a fever, trauma-induced neuroinflammation, brain inflammation, or reduced cognition.

16. The nutritional composition for use of any of claims 1-15, wherein the therapeutically effective amount of 2FL is from about 25 mg/kg bodyweight to about 1000 mg/kg bodyweight.

17. The nutritional composition for use of any of claims 1-16, wherein the nutritional composition is a liquid comprising from about 0.001 mg/mL to about 20 mg/mL of 2FL.

18. The nutritional composition for use of any of claims 1-17, wherein the nutritional composition is a powder comprising from about 0.0005% to about 5% of 2FL by weight of the powder.

19. The nutritional composition for use of any of claims 1-18, wherein the nutritional composition further comprises one or more of a fat, a protein, or a carbohydrate.

20. The nutritional composition for use of any of claims 1-19, wherein the subject is a human and has an age of not more than about 20 years old.

21. The nutritional composition for use of any of claims 1-19, wherein the subject is a human and has an age from about 20 years old to about 40 years old.

22. The nutritional composition for use of any of claims 1-19, wherein the subject is a human and has an age of not less than about 40 years old.
